# EUROPEAN PATENT APPLICATION

(11) **EP 2 407 356 A1**
(43) Date of publication of application: **18.01.2012**
(21) Application number: 10007414.5
(22) Date of filing: 17.07.2010
(51) Int. Cl.: B60T 7/22

(54) **Method for autonoumously braking a motor vehicle and autonomous braking system for a motor vehicle**

(71) Applicant: Valeo Schalter und Sensoren GmbH, 74321 Bietigheim-Bissingen (DE)
(72) Inventor: Groult, Xavier, 95470 Survilliers (FR)

(57) **Abstract**

The invention relates to a method for autonomously braking a motor vehicle (1) by means of an autonomous braking system (2) of the vehicle (1), comprising the step of detecting an obstacle (5) present in a surrounding area (6) of the vehicle (1) by means of a sensor device (7) of the vehicle (1), and the step of autonomously braking the vehicle (1) by means of the autonomous braking system (2) upon a braking criterion in respect of a distance (9) between the obstacle (5) and the vehicle (1) being fulfilled, wherein at least one braking parameter is set for the autonomous braking. A driving behaviour (DB_{F}) of a driver of the vehicle (1) is determined and considered by the autonomous braking system (2) for the autonomous braking. The invention also relates to an autonomous braking system (2) for a motor vehicle (1).

## Description

The invention relates to a method for autonomously braking a motor vehicle by means of an autonomous braking system of the vehicle. An obstacle present in a surrounding area of the vehicle is detected by means of a sensor device of the vehicle. The vehicle is autonomously braked by means of the autonomous braking system upon a braking criterion in respect of a distance between the obstacle and the vehicle being fulfilled. At least one braking parameter is set for the autonomous braking. The invention also relates to an autonomous braking system for a motor vehicle, for autonomously braking the vehicle, wherein the system comprises a sensor device and a control unit.

Autonomous braking systems for autonomously braking a motor vehicle are already known from the prior art. For instance, autonomous braking can be applied while controlling a distance between the vehicle and a vehicle driving ahead. Here, so-called active cruise control (ACC) systems can be used. Furthermore, the vehicle may also be completely decelerated - i.e. completely braked - if a risk of a collision is detected, i.e. if a collision is imminent. For this purpose, a collision warning system can be used.

An object of the present invention is to provide a solution as to how the reliability of an autonomous braking system can be improved over the prior art.

This problem is solved - according to the present invention - by means of a method having the features of patent claim 1 as well as by an autonomous braking system having the features according to patent claim 14. Advantageous embodiments of the invention are subject-matter of the dependent patent claims and the description.

A method according to the present invention serves to autonomously brake a motor vehicle by means of an autonomous braking system of the vehicle. An obstacle present in a surrounding area of the vehicle is detected by means of a sensor device of the vehicle.

Autonomous braking is performed by means of the autonomous braking system upon a braking criterion in respect of a distance between the obstacle and the vehicle being fulfilled. At least one braking parameter is set for the autonomous braking. According to the invention, a driving behaviour of a driver of the vehicle is determined and considered by the autonomous braking system for the autonomous braking.

Thus, according to the present invention, the autonomous braking system determines the driving behaviour of the driver, and the driving behaviour is considered for the autonomous braking. For instance, the driving behaviour can be classified to be "sportive" or "calm" or "normal". The invention has the advantage that the classification of the driving behaviour allows to adapt the sensitivity of the autonomous braking system. In this way, the autonomous braking can be initiated later for a driver classified as "sportive", for example. On the other hand, the autonomous braking can be initiated earlier for a driver classified as "calm" or "normal". Thus, the reliability of the autonomous braking system can be improved over the prior art.

The autonomous braking system can autonomously brake the vehicle. This means that the vehicle is braked independently of the driver and thus independently of a brake pedal - by means of a control unit, for instance.

The autonomous braking system can have the function of an active cruise control system which controls a distance between the vehicle and a vehicle driving ahead. Then, the autonomous braking system can autonomously brake the vehicle in order to control the distance. Additionally or alternatively, the autonomous braking system can have a function of a collision warning system. In this case, the autonomous braking system can completely brake the vehicle if a risk of a collision is detected, i.e. a collision is imminent.

The sensor device may be any device known from the prior art. For example, the sensor device can comprise at least one ultrasonic sensor and/or at least one radar device and/or at least one LIDAR-device and/or at least one digital camera. The sensor device can be adapted to measure a distance between the vehicle and an obstacle detected in the surrounding area of the vehicle.

So, the autonomous braking system determines and considers the driving manner of the driver. In one embodiment, the braking criterion and/or the at least one braking parameter is dynamically set in dependence on the determined driving behaviour of the driver. In other words, a point in time for initiating the autonomous braking can be set depending on the determined driving behaviour. Alternatively or additionally, the braking procedure itself can be configured in dependency on the driving style of the driver, namely by setting the at least one braking parameter. This embodiment has the advantage that the braking criterion and/or the automatic braking procedure itself can be adapted to a specific current driving behaviour of the driver.

In one embodiment, the braking criterion comprises the condition that the distance between the obstacle and the vehicle falls below a limit distance value. Then, the limit distance value can be set in dependency on the determined driving behaviour. The automatic braking can be initiated earlier if a "calm" driver is detected and can be initiated later if a "sportive" or "aggressive" driver is detected by the system. A linear relationship between the limit distance value and the driving behaviour can be applied, for instance. Setting the limit distance value in dependency on the determined driving behaviour allows adapting the braking criterion to different driving styles and thus to different kinds of drivers.

The braking criterion can also comprise further conditions, namely a condition regarding a distance rate, i.e. a speed of a distance change, for instance. In one embodiment, the braking criterion may comprise the condition that the distance rate exceeds a limit rate value which can be set in dependency on the determined driving behaviour. The distance rate, in principle, is a relative velocity between the vehicle and the obstacle in the longitudinal direction of the vehicle.

Moreover, for the autonomous braking, a braking force exerted on a vehicle wheel as a braking parameter can be set in dependence on the determined driving behaviour. In this embodiment, a greater braking force can be applied to the vehicle wheel for a "sportive" driver than for a "normal" or "calm" one. The autonomous braking can be performed more smoothly for a "calm" driver. In this way, the activation of the ABS system can be avoided for a "normal" and "calm" driver. The relationship between the braking force exerted on the vehicle wheel and the driving behaviour can also be a linear relationship. This embodiment has the advantage that the braking force can be adapted to different driving styles and thus to different kinds of drivers.

Several different methods for determining the driving behaviour of a vehicle driver are already known from the prior art. For instance, the method according to US 6,827,668 B2 serves to classify the driving behaviour depending on vehicle parameters; in the subject-matter according to this document, the driver behaviour is used to adapt the control of a gearbox. Moreover, the document US 629 5000 B describes a method for determining the driving behaviour of a driver depending on a throttle pedal travel value. In the subject-matter according to the document GB 950 0872 A, the driving behaviour is determined using a steering wheel angle, a brake pedal travel, a throttle pedal travel as well as a longitudinal and lateral acceleration of the vehicle. Also, the document EP 1 256 479 A describes a method for determining the driving behaviour, wherein a vehicle speed, the longitudinal acceleration as well as the engine speed are considered. Furthermore, a pedal position and a pedal rate are used for determining the driving behaviour. A method for determining the driving behaviour of a driver is also known from the document EP 1 780 090 A.

However, it has turned out to be very advantageous if the driving behaviour of the driver is determined as follows:
The driving behaviour can be determined in dependency on at least one measured parameter describing driving dynamic conditions of the vehicle. This means that the driving behaviour is estimated depending on dynamics of vehicle movement. In this way, the driving behaviour can be determined with a great degree of precision. For instance, the driving behaviour can be determined in dependency on at least one of the following measured parameters:
   - a pressure applied by a braking device of the vehicle - a master cylinder pressure, for instance - in particular a maximum value of the pressure within a predefined period of time and/or
   - a pressure rate - i.e. a speed of pressure change -, in particular a maximum value of the pressure rate within a predefined period of time and/or
   - a speed of actuating a clutch pedal, in particular a maximum value of the actuating speed within a predefined period of time and/or
   - a frequency of actuating the clutch pedal, in particular a maximum value of the actuating frequency within a predefined period of time - for determining the actuating frequency a period of time between two actuations of the clutch pedal can be measured - and/or
   - a throttle pedal travel, in particular a maximum value of the throttle pedal travel within a predefined period of time and/or
   - a speed of actuating the throttle pedal, in particular a maximum value of the actuating speed within a predefined period of time and/or
   - a steering wheel angle rate, in particular a maximum value of the steering wheel angle rate within a predefined period of time and/or
   - a vehicle velocity while driving forwards, in particular a maximum value of the velocity within a predefined period of time and/or
   - a vehicle velocity while driving backwards, in particular a maximum value of the velocity within a predefined period of time and/or
   - a longitudinal acceleration of the vehicle, in particular a maximum value of the longitudinal acceleration within a predefined period of time and/or
   - a lateral acceleration of the vehicle, in particular a maximum value of the lateral acceleration within a predefined period of time and/or
   - a difference between the longitudinal acceleration and the lateral acceleration, in particular a difference between the maximum value of the longitudinal acceleration and the maximum value of the lateral acceleration and/or
   - a rate of the difference between the longitudinal and the lateral acceleration, in particular a maximum value of the difference rate within a predefined period of time.

Depending on said parameters, the driving behaviour of the driver can be estimated with the greatest degree of precision. In one embodiment, the driving behaviour can be determined on the basis of a plurality of parameters. Then, for each parameter an intermediate classification of the driving behaviour can be made separately. The result of each intermediate classification can then be multiplied by a weighting factor associated with the respective parameter. Finally, the total classification of the driving behaviour can be made depending on the weighted results of the intermediate classifications. This embodiment is based on the cognition that some parameters are more significant, whereas others may be less significant. Thus, the driving behaviour can be determined with greatest precision.

As has been set out above, the driving behaviour of the driver can be determined in dependence on the vehicle velocity while driving backwards. Generally speaking, the driving behaviour of the driver can be determined in dependency on at least one parameter describing driving dynamic conditions of the vehicle, wherein the at least one parameter is measured while driving backwards. This embodiment allows to draw conclusions about the driving behaviour of the driver even more accurately than any other method of the prior art. For instance, if the driver drives the vehicle backwards with a very high speed - i.e. a speed exceeding a predefined threshold value - the driver can be classified as "sportive" or "aggressive".

In one embodiment, the driving behaviour of the driver is determined in dependency on a state of at least one vehicle system for influencing driving dynamic conditions of the vehicle, wherein the state is set by a user by means of an operating device. For instance, the autonomous braking system can determine whether a vehicle system for influencing dynamic conditions of the vehicle is activated or not. Then, while determining the driving behaviour of the driver information can be considered whether this system is activated or not. This embodiment can be illustrated by the following example: The autonomous braking system can determine whether a vehicle dynamic control system is activated or deactivated by the driver. If the vehicle dynamic control system (ESP, for instance) is deactivated, the driver can be classified as "sportive". Otherwise, the driver can be classified as "normal" or "calm".

For instance, the driving behaviour of the driver can be determined in dependence on the state of at least one of the following vehicle systems, wherein the state is set by the user:
- a vehicle dynamic control system - the autonomous braking system can determine whether the vehicle dynamic control system is activated or not - and/or
- a traction control system (TC) - the autonomous braking system can determine whether the TC is activated or not - and/or
- a suspension device of the vehicle - the autonomous braking system can determine which mode of the suspension device is currently set by the user: "sport" or "normal" or "comfort", for instance - and/or
- a vehicle gearbox - the autonomous braking system can also determine which mode of the gearbox is currently set by the user, namely a "normal" mode or "sport" mode or "selective" mode, for instance - and/or
- an adaptive cruise control system (ACC) for controlling a distance between the vehicle and a further vehicle driving ahead - the autonomous braking system can determine whether the desired distance is set to "close" or "medium" or "long".

So, while determining the driving behaviour of the driver, the autonomous braking system can consider the state of at least one vehicle system operated by the user. In one embodiment, the driving behaviour of the driver can also be determined in dependency on a state of at least one vehicle system for influencing driving dynamic conditions of the vehicle, wherein the state is autonomously set by this system. For instance, the autonomous braking system can determine whether an anti-locking brake system (ABS) is currently activated or not. The driving behaviour of the driver can be determined in dependency on the state of at least one of the following vehicle systems:
- an electronic brake distribution system (EBD) - i.e. a system that controls the brake force given to the rear wheels; i.e. it controls the rear brake amount as a function of the front brake amount (EBC doesn't control the front brakes) - and/or
- a vehicle dynamic control system (ESP) and/or
- an anti-locking brake system (ABS) and/or
- a cornering brake control system (CBC).

It is very advantageous to determine whether a trailer is towed by the vehicle. Then, while determining the driving behaviour of the driver, information can be considered whether a trailer is towed by the vehicle or not. If a trailer is towed by the vehicle, the driver can be considered to be "calm". Otherwise, the driver can be classified as "normal" or "sportive". So, information about whether a trailer is towed by the vehicle or not allows drawing conclusions regarding the actual current driving behaviour of the driver.

As has been set out above, a plurality of parameters can be used for the total classification of the driving behaviour of the driver. For instance, parameters describing driving dynamic conditions of the vehicle measured during a forward motion and/or during a backward motion can be used for the classification of the driving behaviour. Furthermore, parameters regarding a state of at least one vehicle system for influencing driving dynamic conditions can be used for determining the driving behaviour. Also, information about a trailer can be used as a parameter. For each parameter - i.e. for each piece of information - an intermediate classification of the driving behaviour - for instance "calm" or "normal" or "sportive" - can be made separately. A result of each intermediate classification can be weighted using a weighting factor associated with the respective parameter or respective piece of information. The total classification can be made depending on said weighted results of the intermediate classifications. The advantage of this embodiment is that different significances of different parameters or different pieces of information can be considered while determining the driving behaviour of the driver.

According to the invention, also an autonomous braking system is provided for a motor vehicle. The autonomous braking system is designed to autonomously brake the vehicle. The autonomous braking system comprises a sensor device for detecting an obstacle present in the surrounding area of the vehicle. The system also comprises a control unit for autonomously braking the vehicle upon a braking criterion in respect of a distance between the obstacle and the vehicle being fulfilled. The control unit is adapted to set at least one braking parameter for the autonomous braking. The control unit is adapted to determine a driving behaviour of a driver of the vehicle and to considering the driving behaviour for the autonomous braking.

The embodiments presented as preferable with regard to the method according to the invention and their advantages apply in analogy to the autonomous braking system according to the invention.

Further features of the invention may be gathered from the claims, the figures and the description of the figures. The features and feature combinations previously mentioned in the description as well as the features and feature combinations mentioned further along in the description of the figures and/or shown in the figures alone are usable not only in the respectively indicated combination, but also in other combinations and alone without departing from the scope of the invention.

The invention is now set out in more detail on the basis of individual embodiments as well as by making reference to the enclosed drawings.

These show in:
- Fig. 1: a schematic view of a vehicle comprising an autonomous braking system according to one embodiment of the present invention;
- Fig. 2: a flow diagram of a method according to one embodiment of the present invention;
- Fig. 3: a flow diagram of a method according to one embodiment of the present invention, wherein a total classification of a driving behaviour is explained in more detail;
- Fig. 4: a flow diagram of a method according to one embodiment of the present invention, wherein a final determining of the driving behaviour is explained in more detail; and
- Fig. 5: a flow diagram of a method according to one embodiment of the invention.

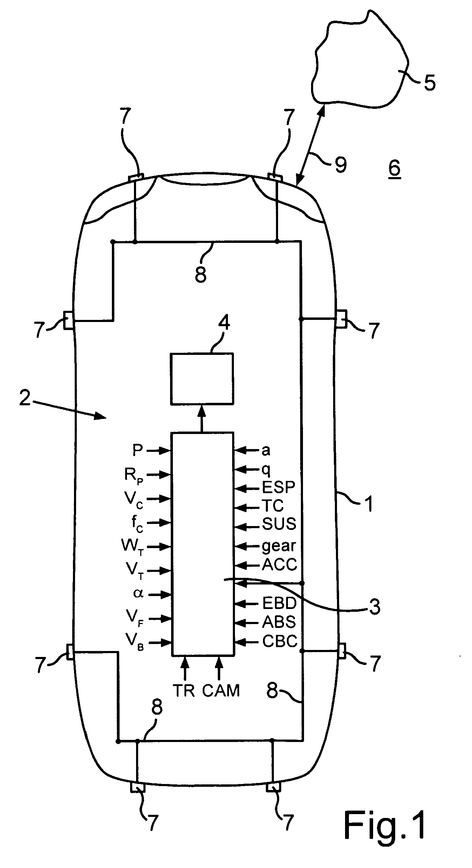

A vehicle 1 shown in fig. 1 is, for instance, a passenger car. The vehicle 1 has an autonomous braking system 2 for autonomously braking the vehicle 1. The autonomous braking system 2 comprises a control unit 3 which can comprise a digital signal processor, a microcontroller as well as a memory. For the purpose of autonomous braking, the control unit 3 is electrically connected to a braking control device 4 of the vehicle 1. The control unit 3 can set diverse braking parameters while autonomously braking the vehicle 1. For instance, the control unit 3 can set a braking force applied for autonomous braking, i.e. a force exerted on the vehicle wheels. The control unit 3 can set a pressure that is applied on a braking device of the vehicle 1. This can, for instance, be a master cylinder pressure.

The control unit 3 brakes the vehicle 1 autonomously, i.e. independently of a driver action and thus independently of an actuation of the brake pedal. The control unit 3 brakes the vehicle 1 if there is a risk of a collision between the vehicle 1 and an obstacle 5 present in a surrounding area 6 of the vehicle 1. If a risk of a collision is detected by the control unit 3, the autonomous braking is performed by means of the control unit 3.

For detecting the obstacle 5, the autonomous braking system 2 comprises a sensor device 7, which can comprise diverse sensors fixed to a surface of the vehicle 1. The sensor device 7 is shown in fig. 1 in a schematic and abstract way; this means that the number and the location of the sensors is presented in an exemplary fashion and thus may vary. The sensor device 7 can comprise at least one ultrasonic sensor and/or at least one radar device and/or at least one digital camera. The sensor device 7 is electrically connected to a communication bus 8 and can transmit measured data through the communication bus 8 to the control unit 3. Namely, the control unit 3 is also electrically connected to the bus 8. In dependence on the measured data the control unit 3 can determine a distance 9 between the obstacle 5 and the vehicle 1. Additionally, the control unit 3 can determine a relative velocity between the obstacle 5 and the vehicle 1 in the longitudinal direction of the vehicle 1.

The control unit 3 brakes the vehicle 1 upon a braking criterion being fulfilled. This braking criterion may comprise conditions regarding the distance 9 as well as the relative velocity between the obstacle 5 and the vehicle 1. For instance, the braking criterion can comprise the condition that the distance 9 falls below a limit distance value as well as the condition that the relative velocity exceeds a limit velocity value.

For the autonomous braking, the control unit 3 determines a driving behaviour DB_{F} of the driver. In dependence on the determined driving behaviour DB_{F}, the control unit 3 sets the braking criterion as well as the braking parameters. The control unit 3 sets the limit distance value and the limit velocity value for the braking criterion depending on the driving behaviour DB_{F}. Moreover, the braking force - i.e. the pressure - is set by the control unit 3 depending on the estimated behaviour DB_{F}.

The driving behaviour DB_{F} can be classified as "calm" or "normal" or "sportive". In dependence on the driving behaviour DB_{F} the control unit 3 sets the braking parameters as well as the braking criterion. For instance, the autonomous braking can be initiated later - i.e. at a smaller distance 9 - for a driver classified as "sportive". The relationship between the driving behaviour and the distance at which the autonomous braking is initiated can be a linear relationship, for instance. The braking force as a braking parameter can also be set in dependence on the driving behaviour DB_{F}. For example, a greater braking force can be applied for a sportive driver than for a calm one. This relationship can also be a linear one.

For determining the driving behaviour DB_{F}, the control unit 3 receives diverse pieces of information. The control unit 3 receives diverse signals comprising diverse information about driving dynamic conditions of the vehicle 1. The control unit 3 receives the following signals:
- a signal comprising data about a current master cylinder pressure P,
- a signal comprising data about a pressure rate R_{P}, i.e. a speed of a change of the pressure P,
- a signal comprising data about a speed V_{C} of actuating a clutch pedal,
- a signal comprising data about a frequency f_{C} of actuating the clutch pedal,
- a signal comprising data about a throttle pedal travel W_{T},
- a signal comprising data about a speed V_{T} of actuating the throttle pedal,
- a signal comprising data about a current steering wheel angle α,
- a signal comprising data about a current velocity V_{F} of the vehicle 1 while driving forwards,
- a signal comprising data about a velocity V_{B} of the vehicle 1 while driving backwards,
- a signal comprising data about a current longitudinal acceleration a of the vehicle 1,
- a signal comprising data about a current lateral acceleration q of the vehicle 1,
- a signal comprising data about a current state of a vehicle dynamic control system, such as ESP,
- a signal comprising data about a current state of a traction control system TC,
- a signal comprising data about a current operation mode of a suspension device SUS,
- a signal comprising data about a current operation mode of a gearbox of the vehicle 1,
- a signal comprising data about a current state of an adaptive cruise control system ACC,
- a signal comprising data about a current state of an electronic brake distribution system EBD,
- a signal comprising data about a current state of an anti-locking brake system ABS,
- a signal comprising data about a current state of a cornering brake control system CBC,
- a signal comprising information about whether a trailer TR is towed by the vehicle 1 or not, and
- a signal comprising information provided by a digital camera CAM located inside the vehicle 1, for example information about a current velocity of the vehicle 1 detected by the digital camera CAM on an instrument panel of the vehicle 1.

Depending on said signals, the control unit 3 determines the driving behaviour DB_{F} of the driver of the vehicle 1.

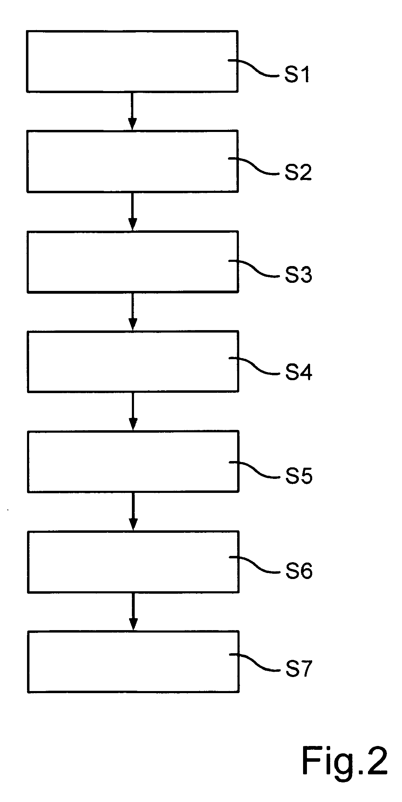

Referring now to fig. 2, a method according to one embodiment of the present invention is explained in more detail: In step S1, the obstacle 5 is detected by the sensor device 7. In further step S2, the control unit 3 tracks the obstacle 5. In step S3, the control unit 3 determines the driving behaviour DB_{F}. In further step S4, the control unit 3 defines the braking criterion depending on the driving behaviour DB_{F}. In step S5, the control unit 3 sets the braking parameters depending on the driving behaviour DB_{F}. In step S6, the control unit 3 determines whether the braking criterion is fulfilled or not. If the braking criterion is fulfilled, the control unit 3 brakes the vehicle 1 completely, namely in step S7.

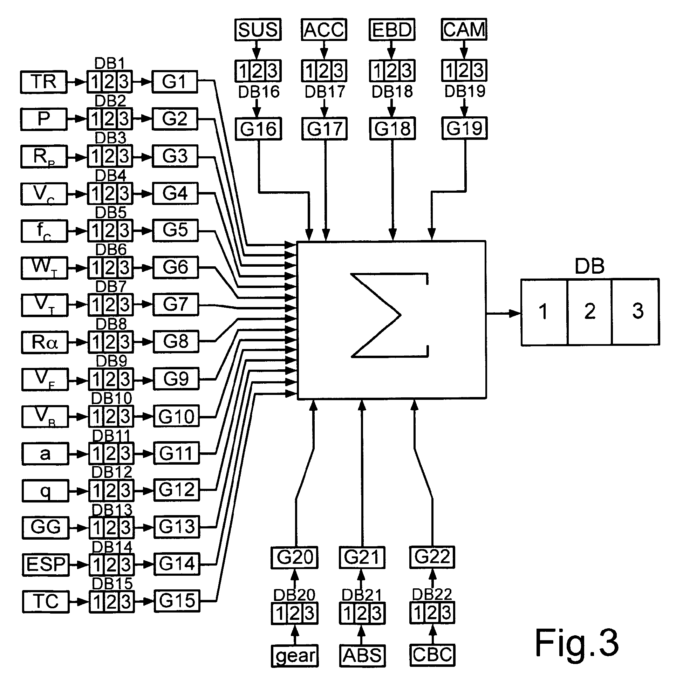

Referring now to fig. 3, a method for determining a total driving behaviour DB is explained in more detail. The driving behaviour DB is classified in dependency on diverse information. The driving behaviour DB can be classified to be
- 1 - "calm" or
- 2 - "normal" or
- 3 - "sportive", i.e. "aggressive".

The total driving behaviour DB is determined depending on diverse information. Initially, intermediate classifications of the driving behaviour DB1 to DB22 are made each depending on one piece of information. Each intermediate driving behaviour DB1 to DB22 can be classified to be:
- 1 - "calm" or
- 2 - "normal" or
- 3 - "sportive", i.e. "aggressive".

For each intermediate driving behaviour DB1 to DB22 a weighting factor G1 to G22 is used. In dependency on weighted intermediate driving behaviours DB1 to DB22 the total driving behaviour DB is determined.

For the intermediate classifications the following pieces of information are used:
- information about whether a trailer TR is towed by the vehicle 1 or not: if a trailer is towed by the vehicle 1, the intermediate driving behaviour DB1 is classified to be "calm" (1); otherwise, the first intermediate driving behaviour DB1 is considered to be "normal" or "sportive" (2 or 3);
- a maximum value of the pressure P: if this maximum value is less than a first pressure threshold value, the second driving behaviour DB2 is considered to be "calm" (1); if the maximum value of the pressure P is greater than the first threshold value but less than a second pressure threshold value, the second driving behaviour DB2 is classified to be "normal" (2); if the maximum value is greater than the second threshold value, the second driving behaviour DB2 is assumed to be "sportive" (3);
- a maximum value of a pressure rate R_{P}: if R_{P} is less than a first rate threshold value, the DB3 is classified to be "calm" (1); if R_{P} is greater than the first threshold value but less than a second threshold value, the DB3 is considered to be "normal" (2); otherwise, the DB3 is considered to be "sportive" (3);
- a maximum value of the speed V_{C} of actuating the clutch pedal: if this value of V_{C} is less than a first threshold value, the DB4 is classified to be "calm" (1); if the maximum value of V_{C} is greater than the first threshold value but less than a second threshold value, the DB4 is considered to be "normal" (2); otherwise, the DB4 is considered to be "sportive" (3);
- a maximum value of the frequency f_{C} of actuating the clutch pedal, i.e. the frequency of gear changing: if max(f_{C}) is less than a first threshold value, the DB5 is classified to be "calm" (1); if max(f_{C}) is greater than the first threshold value but less than a second threshold value, the DB5 is classified to be "normal" (2); otherwise, the DB5 is classified to be "sportive" (3).
- a maximum value of the throttle pedal travel W_{T}; if this maximum value is less than a first threshold value, the DB6 is considered to be "calm" (1); if this maximum value is greater than the first threshold value but less than a second threshold value, the DB6 is considered to be "normal" (2); otherwise, the DB6 is considered to be "sportive" (3);
- a maximum value of the speed V_{T} of actuating the throttle pedal: if max(V_{T}) is less than a first threshold value, the DB7 is classified to be "calm" (1); if max(V_{T}) is greater than the first threshold value but less than a second threshold value, the DB7 is classified to be "normal" (2); otherwise, the DB7 is classified to be "sportive" (3);
- an absolute value of a maximum value of a steering wheel angle rate R_{α}: if the maximum value of R_{α} is less than a first threshold value, the DB8 is classified to be "calm" (1); if this maximum value is greater than the first threshold value but less than a second threshold value, the DB8 is classified to be "normal" (2); otherwise, the DB8 is classified to be "sportive" (3);
- a maximum value of the vehicle velocity V_{F} while driving forwards: if the maximum value of V_{F} is less than a first threshold value, the DB9 is considered to be "normal" (1); if this maximum value is greater than the first threshold value but less than a second threshold value, the DB9 is classified to be "normal" (2); otherwise, the DB9 is classified to be "sportive" (3);
- a maximum value of the vehicle velocity V_{B} while driving backwards: if this maximum value is less than a first threshold value, the DB10 is classified to be "calm" (1); if this maximum value is greater than the first threshold value but less than a second threshold value, the DB10 is classified to be "normal" (2); if this maximum value of V_{B} is greater than the second threshold value, the DB10 is classified to be "sportive" (3);
- an absolute value of a maximum value of the lateral acceleration a: if this maximum value is less than a first threshold value, the driving behaviour DB11 is classified to be "calm" (1); if this maximum value is greater than the first threshold value but less than a second threshold value, the DB11 is classified to be "normal" (2); otherwise, the DB11 is classified to be "sportive" (3);
- a maximum value of the lateral acceleration q: if this maximum value is less than a first threshold value, the driving behaviour DB12 is classified to be "calm" (1); if this maximum value is greater than the first threshold value but less than a second threshold value, the DB12 is classified to be "normal" (2); otherwise, the DB12 is classified to be "sportive" (3);
- a maximum value of a difference GG between the longitudinal acceleration a and the lateral acceleration q: if this maximum value is less than a first threshold value, the DB13 is classified to be "calm" (1); if this maximum value is greater than the first threshold value, but less than a second threshold value, the DB13 is classified to be "normal" (2); otherwise, the DB13 is classified to be "sportive" (3);
- information about whether the ESP is activated or deactivated by the user: if the ESP is activated, the DB14 is classified to be "calm" (1) or "normal" (2); otherwise, the DB14 is classified to be "sportive" (3);
- information about whether the traction control system TC is activated or deactivated by the user: if TC is deactivated, the DB15 is classified to be "sportive" (3); othervvise, the DB15 is classified to be "calm" (1) or "normal" (2);
- information about the current mode of the suspension device SUS: "calm" (1) or "normal" (2) or "sportive" (3);
- information about the state of the ACC: if a distance to be controlled is set to "close", the DB17 can be classified to be "sportive" (3); if the distance is set to "medium", the DB17 is classified to be "normal" (2); if the distance is set to "long", the DB17 is classified to be "calm" (1);
- a state of the electronic brake distribution system EBD: if the EBD is activated, the DB18 is considered to be "sportive" (3); otherwise, the DB18 is classified to be "calm" (1) or "normal" (2);
- video data from the digital camera CAM capturing the instrument panel of the vehicle 1 and detecting the vehicle speed presented on the control panel;
- information about an operation mode of the gearbox: if the gearbox is set to "normal", the DB20 can be classified to be "calm" (1) or "normal" (2); if the gearbox is set to "sportive" or "selective", the DB20 can be assumed to be "sportive" (3);
- information about a current state of the ABS: if the ABS is activated, the DB21 is classified to be "sportive" (3); otherwise, the DB21 is classified to be "calm" (1) or "normal" (2);
- information about a current state of the cornering brake control system CBC: if the CBC is activated, the DB22 is considered to be "sportive" (3); otherwise, the DB22 is classified to be "calm" (1) or "normal" (2).

Further, the control unit 3 can also consider a rate R_{GG} (not shown in fig. 3) of said difference GG between the longitudinal and the lateral acceleration a, q. For instance, if a maximum value of the rate R_{GG} is less than a first threshold value, the intermediate driving behaviour according to R_{GG} can be classified as "calm". If this maximum value of the rate R_{GG} is greater than the first threshold value but less than a second threshold value, the intermediate driving behaviour according to R_{GG} can be classified as "normal". Otherwise, the intermediate driving behaviour according to R_{GG} can be classified as "sportive".

So, all pieces of information allow to intermediately determine the driving behaviour DB1 to DB22. This means that in dependence on each piece of information, an intermediate driving behaviour DB1 to DB22 is determined by the control unit 3. Then, the results of the intermediate classifications are weighted by means of weighting factors G1 to G22 and combined to determine the total driving behaviour DB. This driving behaviour DB can be classified to be "calm" (1) or "normal" (2) or "sportive" (3).

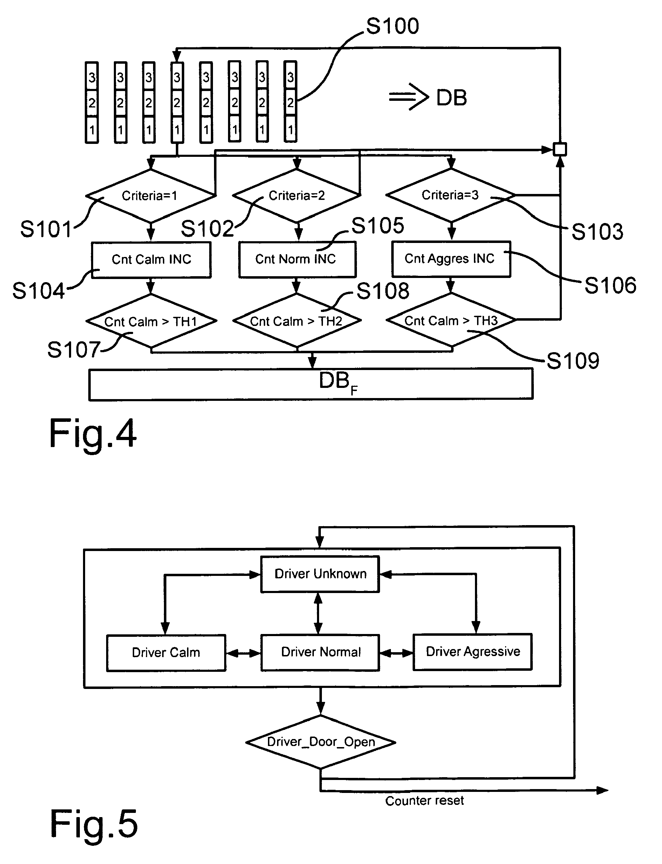

Referring now to fig. 4, the total driving behaviour DB is classified anew each time upon a change of any piece of information - i.e. of any of said parameters -, i.e. upon a change of any intermediate driving behaviour DB1 to DB22. The total driving behaviour DB is classified each time in a step S100. Then, the control unit 3 determines in steps S101 to S103 whether the classified total driving behaviour DB is equal to 1 ("calm") or 2 ("normal") or 3 ("sportive"). If the driving behaviour is equal to 1, a counter "CNT Calm" is incremented in step S104. If the driving behaviour DB is classified to be "normal" and thus is equal to 2, a counter "CNT Norm" is incremented in step S105. If the driving behaviour DB is equal to 3, a counter "CNT Aggress" is incremented in step S106. The control unit 3 determines in steps S107 to S109 whether said counters exceed a predetermined threshold value TH1 or TH2 or TH3. So, in step S107 the control unit 3 determines whether the counter "CNT Calm" is greater than the threshold value TH1. In step S108, the control unit 3 determines whether the counter "CNT Norm" is greater than TH2. Finally, in step S109, the control unit 3 determines whether the counter "CNT Aggress" is greater than the threshold value TH3. If one of said counters is greater than the associated threshold value TH1, TH2, TH3, the final driving behaviour DB_{F} can be classified: If the counter "CNT Calm" is greater than the threshold value TH1, the DB_{F} is classified to be "calm" (1). If the counter "CNT Norm" is greater than the second threshold value TH2, the DB_{F} is set to 2 ("normal"). If the counter "CNT Aggress" is greater than the threshold value TH3, the DB_{F} is set to "sportive" (3).

Referring now to fig. 5, the initial state of the driving behaviour DB_{F} is defined as unknown. This is the default state. Due to possible errors, only one transition between two different states of the driving behaviour DB_{F} is allowed, i.e. only a transition between two neighbouring states is allowed - between "calm" and "normal" or between "normal" and "sportive" (aggressive). Otherwise, DB_{F} is defined as unknown. Once the driver opens the vehicle door, said counters "CNT Calm", "CNT Norm", "CNT Aggress" are reset.

## Claims

1. A method for autonomously braking a motor vehicle (1) by means of an autonomous braking system (2) of the vehicle (1), comprising the steps of:
- detecting an obstacle (5) present in a surrounding area (6) of the vehicle (1) by means of a sensor device (7) of the vehicle (1),
- autonomously braking the vehicle (1) by means of the autonomous braking system (2) upon a braking criterion in respect of a distance (9) between the obstacle (5) and the vehicle (1) being fulfilled, wherein at least one braking parameter is set for the autonomous braking,
**characterized in that**
a driving behaviour (DB_{F}) of a driver of the vehicle (1) is determined and considered by the autonomous braking system (2) for the autonomous braking.

2. The method according to claim 1,
**characterized in that**
the braking criterion and/or the at least one braking parameter is set in dependency on the determined driving behaviour (DB_{F}) of the driver.

3. The method according to claim 1 or 2,
**characterized in that**
the braking criterion comprises the condition that the distance (9) between the obstacle (5) and the vehicle (1) falls below a limit distance value, wherein the limit distance value is set in dependency on the determined driving behaviour (DB_{F}) of the driver.

4. The method according to any one of the preceding claims,
**characterized in that**
for the autonomous braking a braking force exerted on a vehicle wheel as a braking parameter is set in dependency on the determined driving behaviour (DB_{F}) of the driver.

5. The method according to any one of the preceding claims,
**characterized in that**
the driving behaviour (DB_{F}) of the driver is determined in dependency on at least one measured parameter describing driving dynamic conditions of the vehicle (1).

6. The method according to claim 5,
**characterized in that**
the driving behaviour (DB_{F}) of the driver is determined in dependency on at least one of the following measured parameters describing driving dynamic conditions of the vehicle:
- a pressure (P) applied by a braking device of the vehicle, in particular a maximum value of the pressure (P) within a predefined period of time and/or
- a pressure rate (R_{P}), in particular a maximum value of the pressure rate (R_{P}) within a predefined period of time and/or
- a speed (V_{C}) of actuating a clutch pedal, in particular a maximum value of the actuating speed (V_{C}) within a predefined period of time and/or
- a frequency (f_{C}) of actuating the clutch pedal, in particular a maximum value of the actuating frequency (f_{C}) within a predefined period of time and/or
- a throttle pedal travel (W_{T}), in particular a maximum value of the throttle pedal travel (W_{T}) within a predefined period of time and/or
- a speed (V_{T}) of actuating the throttle pedal, in particular a maximum value of the actuating speed (V_{T}) within a predefined period of time and/or
- a steering wheel angle rate (R_{α}), in particular a maximum value of the steering wheel angle rate (R_{α}) within a predefined period of time and/or
- a vehicle velocity (V_{F}) while driving forwards, in particular a maximum value of the velocity (V_{F}) within a predefined period of time and/or
- a vehicle velocity (V_{B}) while driving backwards, in particular a maximum value of the velocity (V_{F}) within a predefined period of time and/or
- a longitudinal acceleration (a) of the vehicle (1), in particular a maximum value of the longitudinal acceleration (a) within a predefined period of time and/or
- a lateral acceleration (q) of the vehicle (1), in particular a maximum value of the lateral acceleration (q) within a predefined period of time and/or
- a difference (GG) between the longitudinal acceleration (a) and the lateral acceleration (q), in particular a difference (GG) between the maximum value of the longitudinal acceleration (a) and the maximum value of the lateral acceleration (q) and/or
- a rate of the difference (GG) between the longitudinal acceleration (a) and the lateral acceleration (q), in particular a maximum value of the difference rate within a predefined period of time.

7. The method according to any one of the preceding claims,
**characterized in that**
the driving behaviour (DB_{F}) of the driver is determined in dependency on at least one parameter (V_{B}) describing driving dynamic conditions of the vehicle (1), the at least one parameter (V_{B}) being measured while driving backwards.

8. The method according to any one of the preceding claims,
**characterized in that**
the driving behaviour (DB_{F}) of the driver is determined in dependency on a state of at least one vehicle system for influencing driving dynamic conditions of the vehicle (1), the state being set by a user by means of an operating device.

9. The method according to claim 8,
**characterized in that**
the driving behaviour (DB_{F}) of the driver is determined in dependency on the state of at least one of the following vehicle systems:
- a vehicle dynamic control system (ESP) and/or
- a traction control system (TC) and/or
- a suspension device (SUS) of the vehicle and/or
- a vehicle gearbox (gear) and/or
- an adaptive cruise control system (ACC) for controlling a distance between the vehicle (1) and a further vehicle driving ahead.

10. The method according to any one of the preceding claims,
**characterized in that**
the driving behaviour (DB_{F}) of the driver is determined in dependency on a state of at least one vehicle system for influencing driving dynamic conditions of the vehicle (1), the state being autonomously set by this system.

11. The method according to claim 10,
**characterized in that**
the driving behaviour (DB_{F}) of the driver is determined in dependency on the state of at least one of the following vehicle systems:
- an Electronic Brake Distribution system (EBD) and/or
- a vehicle dynamic control system (ESP) and/or
- an Anti-locking Brake System (ABS) and/or
- a Cornering Brake Control (CBC) system.

12. The method according to any one of the preceding claims,
**characterized in that**
the autonomous braking system (2) determines whether a trailer is towed by the vehicle (1), wherein while determining the driving behaviour (DB_{F}) of the driver information (TR) is considered whether a trailer is towed by the vehicle or not.

13. The method according to any one of preceding claims,
**characterized in that**
a plurality of parameters are used for a total classification of the driving behaviour (DB_{F}) of the driver, wherein for each parameter an intermediate classification of the driving behaviour (DB1 to DB22) is made separately and a result of each intermediate classification is weighted using a weighting factor (G1 to G22) associated with the respective parameter, and wherein the total classification is made depending on said weighted results (DB1 to DB22) of the intermediate classifications.

14. An autonomous braking system (2) for a motor vehicle (1), for autonomously braking the vehicle (1), comprising:
- a sensor device (7) for detecting an obstacle (5) present in a surrounding area (6) of the vehicle (1) and
- a control unit (3) for autonomously braking the vehicle (1) upon a braking criterion in respect of a distance (9) between the obstacle (5) and the vehicle (1) being fulfilled, wherein the control unit (3) is adapted to set at least one braking parameter for the autonomous braking,
**characterized in that**
the control unit (3) is adapted to determine a driving behaviour (DB_{F}) of a driver of the vehicle (1) and to consider the driving behaviour (DB_{F}) for the autonomous braking.
